# EUROPEAN PATENT SPECIFICATION

(11) **EP 3 468 139 B1**
(45) Date of publication and mention of the grant of the patent: **30.12.2020**
(21) Application number: 18189493.2
(22) Date of filing: 13.05.2014
(51) Int. Cl.: H04W 74/08, H04W 84/12

(54) **MULTI-CHANNEL CONTENTION METHOD, COMMUNICATIONS DEVICE, AND WIRELESS NETWORK SYSTEM**
MEHRKANALKONFLIKTVERFAHREN, KOMMUNIKATIONSVORRICHTUNG UND DRAHTLOSNETZWERKSYSTEM
PROCÉDÉ DE CONTENTION À CANAUX MULTIPLES, DISPOSITIF DE COMMUNICATIONS ET SYSTÈME DE RÉSEAU SANS FIL

(43) Date of publication of application: 10.04.2019
(62) Document number(s) of the earlier application(s) in accordance with Art. 76 EPC: 14892064.8 / 3 136 675
(73) Proprietor: Huawei Technologies Co., Ltd., Shenzhen, Guangdong 518129 (CN)
(72) Inventor: MA, Chixiang, Shenzhen, Guangdong 518129 (CN); LUO, Jun, Shenzhen, Guangdong 518129 (CN); LIU, Yalin, Shenzhen, Guangdong 518129 (CN)
(74) Representative: Thun, Clemens

(56) References cited:
- WO-A1-2012/172157
- US-A1- 2011 317 674
- US-A1- 2012 008 599
- Matthew Gast: "802.11ac: A Survival Guide", , 28 December 2013 (2013-12-28), XP055354479, Retrieved from the Internet: URL:http://web.archive.org/web/20131228040 507/http://chimera.labs.oreilly.com/books/ 1234000001739/ch03.html#section-mac-cca [retrieved on 2017-03-14]
- MINYOUNG PARK: "IEEE 802.11ac: Dynamic Bandwidth Channel Access", ICC 2011 - 2011 IEEE INTERNATIONAL CONFERENCE ON COMMUNICATIONS - 5-9 JUNE 2011 - KYOTO, JAPAN, IEEE, PISCATAWAY, NJ, USA, 5 June 2011 (2011-06-05), pages 1-5, XP031908841, DOI: 10.1109/ICC.2011.5963089 ISBN: 978-1-61284-232-5

## Description

### TECHNICAL FIELD

Embodiments of the present invention relate to the communications technologies, and in particular, to a multi-channel contention method, and a communications device.

### BACKGROUND

In an existing mechanism stipulated in the Institute of Electrical and Electronics Engineers (Institute of Electrical and Electronics Engineers, IEEE for short) 802.11 standard, channels are classified into a primary channel and a secondary channel to increase a transmission bandwidth to increase a peak rate of data transmission. This mechanism is similar to carrier aggregation (Carrier Aggregation, CA for short), and a communications device first needs to contend for access on a primary channel. A priority sequence of access contention on channels is a primary channel, a secondary 20 mega hertz (Mega Hertz, MHz for short) channel, a secondary 40 MHz channel, and a secondary 80 MHz channel. A communications device contends for a next channel only when a previous channel in the foregoing sequence is allowed to be accessed, and finally, channels allowed to be accessed are combined together to form a large bandwidth channel to transmit data.

Currently, to further improve a throughput of a wireless local area network (Wireless Local Area Network, WLAN for short), a scheduling mode is introduced to the IEEE 802.11 standard, a high efficiency wireless local area network (High Efficiency WLAN, HEW for short) system is established, and a basic service set (Basic Service Set, BSS for short) is used as a basic scheduling set. When a BSS needs to perform data transmission, use of the foregoing mechanism leads to a situation in which a channel of a low contention priority is abandoned due to a failure to contend for a channel of a high priority; as a result, not only a success rate of channel contention is low, but also massive bandwidth waste is caused.

WO 2012/172157 A1 refers to methods, apparatuses, and a computer program for carrying out channel reservations in a wireless communication system. A communication apparatus initiates a channel reservation procedure. During the channel reservation procedure, the communication apparatus is caused to transmit a reservation request message comprising information elements specifying at least one secondary channel being reserved and a communication direction for at least one channel being reserved. Upon completed reservation procedure, the communication apparatus is caused to utilize the reserved at least one secondary channel in wireless communication in the communication direction specified in the reservation request message.

Further, the prior art document "802.11ac: A survival Guide", Matthew Gast, 28. December 2013 refers inter alia to medium access procedures.

### SUMMARY

The above mentioned problem is solved by the subject matter of the independent claims. Further implementation forms are provided in the dependent claims.

Embodiments of the present invention provide a multi-channel contention method and a station (STA).

In the following, embodiment 2 relates to the invention. The other embodiments only relate to the invention to the extend that they are referred to in the description of embodiment 2, otherwise they serve as background material.

According to a first aspect, an embodiment provides a communications device applied to a wireless network, where the communications device is an access point AP or a station STA, and the communications device includes:
a channel contention module, configured to: listen to at least two channels, determine a first channel succeeding in contention, and determine a second channel considered to succeed in contention; and
an exchange module, configured to: exchange a control frame with another communications device in the wireless network by using the first channel and the second channel, to occupy the channels, or exchange a data frame.

According to a second aspect, an embodiment provides a multi-channel contention method, including:
listening, by a communications device, to at least two channels;
determining, by the communications device, a first channel succeeding in contention, and determining a second channel considered to succeed in contention; and
exchanging, by the communications device, a control frame with another communications device in a wireless network by using the first channel and the second channel, to occupy the channels, or exchanging a data frame.

According to a third aspect, an embodiment provides a wireless network system, including: at least two communications devices, where one communications device is the STA according to any one of the first aspect or a first implementation manner to a sixth implementation manner of the first aspect, and the other communications device is the AP according to any one of the first aspect, the first implementation manner to a fourth implementation manner, a seventh implementation manner, or an eighth implementation manner of the first aspect; and
the STA and the AP are separately configured to: listen to at least two channels, and exchange a control frame by using a first channel succeeding in contention and a second channel considered to succeed in contention, to occupy the channels, or exchange a data frame.

According to the multi-channel contention method, the communications device, and the wireless network system in the embodiments as disclosed herein, a communications device in a BSS may not distinguish a primary-secondary relationship of channels and may not necessarily contend for channels in sequence according to priorities as in the prior art, but may synchronously determine a first channel and a second channel that succeed in contention, exchange information with another communications device by using the first channel and the second channel, and perform centralized scheduling by using an AP to achieve an objective that at least two communications devices in the BSS use multiple channels to transmit data, which not only improves a success rate of channel contention, but also prevents massive bandwidth waste.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a schematic structural diagram of Embodiment 1 of a communications device applied to a wireless network;
FIG. 2 is a schematic structural diagram of Embodiment 2 of a communications device applied to a wireless network according to the present invention;
FIG. 3 is a schematic diagram 1 of a frame format of a control frame;
FIG. 4 is a schematic diagram 2 of a frame format of a control frame;
FIG. 5 is a schematic structural diagram of an embodiment of a wireless network system.
FIG. 6 is a schematic diagram of a contention mechanism in Embodiment 3 of a communications device applied to a wireless network;
FIG. 7 is a schematic diagram of a contention mechanism in Embodiment 4 of a communications device applied to a wireless network;
FIG. 8 is a schematic diagram of a contention mechanism in Embodiment 5 of a communications device applied to a wireless network;
FIG. 9 is a schematic diagram of a contention mechanism in Embodiment 6 of a communications device applied to a wireless network;
FIG. 10 is a flowchart of Embodiment 1 of a multi-channel contention method;
FIG. 11 is a flowchart of Embodiment 2 of a multi-channel contention method according to the present invention;
FIG. 12 is a flowchart of Embodiment 3 of a multi-channel contention method;
FIG. 13 is a flowchart of Embodiment 4 of a multi-channel contention method; and
FIG. 14A and FIG. 14B are a flowchart of Embodiment 5 of a multi-channel contention method.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

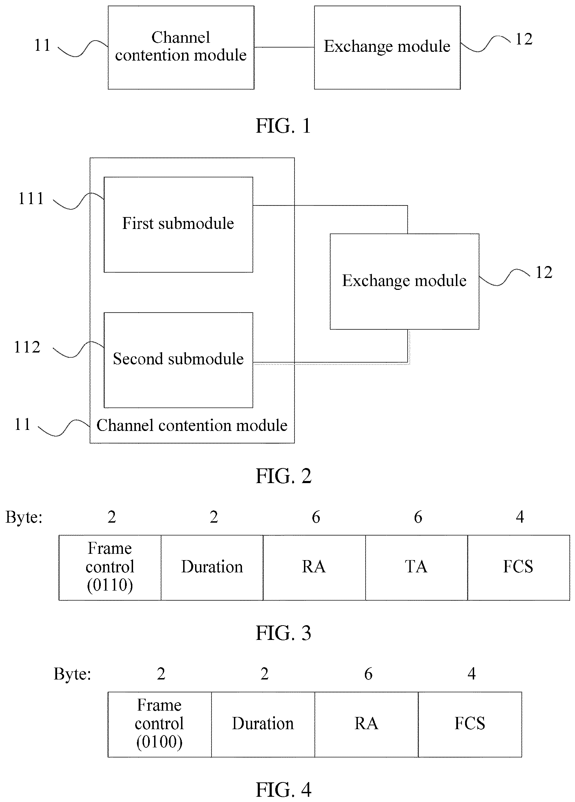

FIG. 1 is a schematic structural diagram of Embodiment 1 of a communications device applied to a wireless network. As shown in FIG. 1, the communications device is an access point (Access Point, AP for short) or any station (Station, STA for short) in a same basic service set (Basic Service Set, BSS for short) as the AP. The communications device in this embodiment may include: a channel contention module 11 and an exchange module 12, where the channel contention module 11 is configured to: listen to at least two channels, determine a first channel succeeding in contention, and determine a second channel considered to succeed in contention; and the exchange module 12 is configured to: exchange a control frame with another communications device in the wireless network by using the first channel and the second channel, to occupy the channels, or exchange a data frame.

The communications device in this embodiment is applicable to a wireless network to which a scheduling mode is introduced, for example, a high efficiency wireless local area network (High Efficiency WLAN, HEW for short) wireless local area network (Wireless Local Area Network, WLAN for short) system; and the HEW WLAN system uses a BSS as a basic service set, the BSS includes an AP and at least two STAs, and the STAs are standard stations in a wireless network to which a scheduling mode is introduced. To improve a success rate of channel contention of the BSS, the AP and the STAs that belong to the same BSS can all participate in channel contention; regardless of whether the AP or any of the STAs succeeds in contention, multiple channels can be used to transmit data.

In this embodiment, a communications device in a BSS may not distinguish a primary-secondary relationship of channels and may not necessarily contend for channels in sequence according to priorities as in the prior art, but may synchronously determine a first channel succeeding in contention and a second channel considered to succeed in contention, and then exchange a control frame or a data frame with another communications device by using the first channel and the second channel, to achieve an objective that at least two communications devices in the BSS use multiple channels to transmit data, which not only improves a success rate of channel contention, but also prevents massive bandwidth waste.

FIG. 2 is a schematic structural diagram of Embodiment 2 of a communications device applied to a wireless network according to the present invention. As shown in FIG. 2, the communications device in this embodiment is based on the device structure shown in FIG. 1. Further, the channel contention module 11 may include: a first sub-module 111 and a second sub-module 112, where the first sub-module 111 is configured to: enter a waiting phase when it is obtained by means of listening that any channel of the at least two channels is in an idle state, and if the any channel is still in an idle state after the waiting phase, determine that the any channel enters a backoff timing phase; and determine a channel that is still in an idle state after a corresponding backoff timing phase ends as the first channel succeeding in contention, and determine another channel that is currently still in a corresponding backoff timing phase and that is in an idle state as the second channel considered to succeed in contention; and the second submodule 112 is configured to: receive the control frame from the another communications device, and determine the channel that receives the control frame as the first channel succeeding in contention; and determine another channel that currently does not receive the control frame but that is in a corresponding backoff timing phase and that is in an idle state as the second channel considered to succeed in contention.

Specifically, when listening to multiple channels and finding that any channel therein is in an idle state, the first submodule 111 enters the waiting phase; duration of the waiting phase may be an x interframe space (Interframe Space, IFS for short), and the xIFS may be duration defined in a standard, such as a short interframe space (Short Interframe Space, SIFS for short), a point coordination function interframe space (Point Coordination Function Interframe Space, PIFS for short), a distributed coordination function interframe space (Distributed Coordination Function Interframe Space, DIFS for short), or an arbitration interframe space (Arbitration Interframe Space, AIFS for short). After the first submodule 111 waits for the duration of the xIFS, if the any channel is still in an idle state, the any channel enters the backoff timing phase, where backoff timing may be a counter in which backoff duration is preset; when the any channel enters the backoff timing phase, the counter starts to count down, that timing ends is that the backoff timing phase ends. The first submodule 111 determines a channel that is still in an idle state after a corresponding backoff timing phase ends as the first channel succeeding in contention, that is, as long as a counter corresponding to any channel returns to zero and the channel is still in an idle state, it indicates that the channel succeeds in contention; it is not excluded that there are multiple channels that synchronously return to zero, and these channels are all first channels succeeding in contention, which is not specifically limited in the present invention. In addition, the first submodule 111 determines other channels that are currently still in corresponding backoff timing phases and that are in an idle state, that is, determines whether other channels enter the backoff timing phases and are in an idle state, and if yes, all these channels that are in the backoff timing phases and that are in an idle state are all second channels considered to succeed in contention.

After receiving a control frame from the another communications device, the communications device as a receiver device may also contend for a channel; the second submodule 112 of the communications device determines a channel that receives the control frame as the first channel succeeding in contention, and determines another channel that currently does not receive the control frame but that is in a corresponding backoff timing phase and that is in an idle state as the second channel considered to succeed in contention; in this way, the communications device participating in channel contention not only can obtain by means of contention a channel by using the first submodule 111 when used as a transmitter device but also can obtain by means of contention a channel by using the second submodule 112 when used as a receiver device, thereby avoiding omission of an available channel.

Further, the foregoing control frame includes a frame control (Frame Control) field used to identify the control frame and a duration (Duration) field used to record duration of occupying a subsequent channel; the control frame may be high efficiency wireless local area network request to send (HEW Request to Send, HEW RTS for short), high efficiency wireless local area network clear to send (HEW Clear to Send, HEW CTS for short), or high efficiency wireless local area network acknowledgement (HEW Acknowledgement, HEW ACK for short).

FIG. 3 is a schematic diagram 1 of a frame format of a control frame. As shown in FIG. 3, a control frame in this embodiment may be a frame dedicated to a wireless network system (for example, an HEW WLAN system) to which a scheduling mode is introduced, and has 20 bytes in total: A Frame Control field has two bytes, and a value of the field is a value not used yet by identification information of a control frame stipulated in the IEEE 802.11 standard and may be, for example, 0110. A STA in a BSS can distinguish according to the value that the control frame is a frame dedicated to the HEW WLAN system, and another conventional STA may also learn according to the value that the control frame is not sent to the another conventional STA and the another conventional STA cannot use a channel within a subsequent period of time. A Duration field has two bytes, is set to duration of occupying a subsequent channel, and includes subsequent scheduling duration, m times of SIFS duration, and the sum of duration of n control frames, where m and n are natural numbers; specific values are related to an actual moment at which the control frame is sent; for example, the control frame is sent by a transmitter device, and then duration of occupying a subsequent channel includes scheduling duration, three times of SIFS duration, and the sum of duration of two control frames. A receiver address (Receiver Address, RA for short) has six bytes, and may be set to, for example, a media access control (Media Access Control, MAC for short) address of an AP, the same as an RA of the control frame stipulated in the IEEE 802.11 standard. A transmitter address (Transmitter Address, TA for short) has six bytes, and may be set to, for example, a MAC address of a STA, the same as a TA of the control frame stipulated in the IEEE 802.11 standard. Frame control sequence (Frame Control Sequence, FCS for short) information has four bytes, the same as an FCS of the control frame stipulated in the IEEE 802.11 standard. The format of the control frame in this embodiment may be the same as a format of the control frame stipulated in the IEEE 802.11 standard, so that all STAs, including STAs in a BSS and conventional STAs, can receive and demodulate the control frame. Each control frame occupies a bandwidth of 20 MHz, the bandwidth of 20 MHz has 64 subcarriers, a quantity and positions of pilot subcarriers are the same as those of control frames in the IEEE 802.11 standard. If there is a bandwidth of 80 MHz, a control frame is separately sent on each bandwidth of 20 MHz. The control frame differs from the control frame in the IEEE 802.11 standard in content of the Frame Control field and the Duration field.

FIG. 4 is a schematic diagram 2 of a frame format of a control frame. As shown in FIG. 4, a control frame in this embodiment may be a frame dedicated to a wireless network system (for example, an HEW WLAN system) to which a scheduling mode is introduced and that has 14 bytes in total: A Frame Control field has two bytes, and a value of the field is a value not used yet by identification information of a control frame stipulated in the IEEE 802.11 standard and may be, for example, 0100. A STA in a BSS can distinguish according to the value that the control frame is a frame dedicated to the HEW WLAN system, and another conventional STA may also learn according to the value that the control frame is not sent to the another conventional STA and the another conventional STA cannot use a channel within a subsequent period of time. A Duration field has two bytes, is set to duration of occupying a subsequent channel, and includes subsequent scheduling duration, m times of SIFS duration, and the sum of duration of n control frames. An RAhas six bytes, and may be set to, for example, a parameter or a numerical value agreed in advance by a communications device in the BSS. FCS information has four bytes, the same as an FCS of the control frame stipulated in the IEEE 802.11 standard. The format of the control frame in this embodiment may be the same as a format of the control frame stipulated in the IEEE 802.11 standard, so that all STAs, including STAs in a BSS and conventional STAs, can receive and demodulate the control frame. Each control frame occupies a bandwidth of 20 MHz, the bandwidth of 20 MHz has 64 subcarriers, a quantity and positions of pilot subcarriers are the same as those of control frames in the IEEE 802.11 standard. If there is a bandwidth of 80 MHz, a control frame is separately sent on each bandwidth of 20 MHz. The control frame differs from the control frame in the IEEE 802.11 standard in content of the Frame Control field, the Duration field, and the RA. Because the RA is a pre-agreed value, all STAs in the BSS can demodulate the value.

Further, when the communications device is a STA, the exchange module 12 is specifically configured to: send the control frame to the another communications device in the wireless network by using the first channel succeeding in contention and the second channel considered to succeed in contention that are determined by the first submodule, to occupy the channels; send the control frame to the another communications device in the wireless network by using the first channel succeeding in contention that is determined by the second submodule, to occupy the channels; and exchange the data frame with the another communications device in the wireless network by using the first channel succeeding in contention that is determined by the second submodule.

Further, when the communications device is a STA, the exchange module 12 is specifically configured to: send the control frame to the another communications device in the wireless network by using the first channel succeeding in contention and the second channel considered to succeed in contention that are determined by the first submodule, to occupy the channels; send the control frame to the another communications device in the wireless network by using the first channel succeeding in contention and the second channel considered to succeed in contention that are determined by the second submodule, to occupy the channels; and exchange the data frame with the another communications device in the wireless network by using the first channel succeeding in contention that is determined by the second submodule.

Further, when the communications device is an AP, the exchange module 12 is specifically configured to: send the control frame to the another communications device in the wireless network by using the first channel succeeding in contention and the second channel considered to succeed in contention that are determined by the first submodule, to occupy the channels; and exchange the data frame with the another communications device in the wireless network by using the first channel succeeding in contention that is determined by second submodule.

Further, when the communications device is an AP, the exchange module 12 is specifically configured to: send the control frame to the another communications device in the wireless network by using the first channel succeeding in contention and the second channel considered to succeed in contention that are determined by the first submodule, to occupy the channels; send the control frame to the another communications device in the wireless network by using the first channel succeeding in contention and the second channel considered to succeed in contention that are determined by the second submodule, to occupy the channels; and exchange the data frame with the another communications device in the wireless network by using the first channel succeeding in contention that is determined by the second submodule.

The technical solutions of any one of communications device embodiments in FIG. 1 to FIG. 4 are described in detail below by using several specific embodiments.

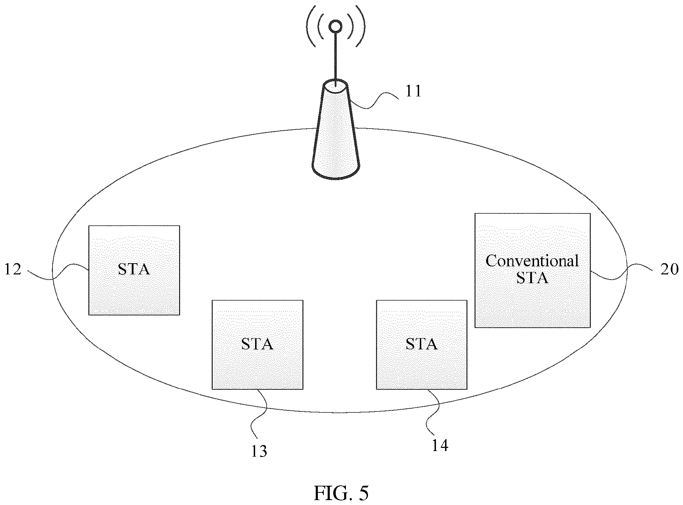

FIG. 5 is a schematic structural diagram of an embodiment of a wireless network system. As shown in FIG. 5, the wireless network system may include: at least two communications devices, where one communications device is the STA shown in FIG. 1 or FIG. 2, and the other communications device is the AP shown in FIG. 1 or FIG. 2; the STA and the AP are separately configured to: listen to at least two channels, and exchange a control frame by using a first channel succeeding in contention and a second channel considered to succeed in contention, to occupy the channels, or exchange a data frame.

Specifically, the wireless network system includes one BSS, and the BSS includes one AP 11, and three STAs, that is, STAs 12, 13, and 14. The AP 11 and the STAs 12, 13, and 14 all listen to at least two channels and participate in contending for multiple channels. In addition, the wireless network system may further include a conventional STA 20, and the conventional STA 20 may be a station belonging to the BSS and meeting the existing IEEE 802.11 standard, or a station not belonging to the BSS but meeting the existing IEEE 802.11 standard.

In the present invention, the communications device in the BSS may exchange information by using the control frame. Because the conventional STA 20 needs to listen to channels to send data, these control frames may also be obtained by means of listening by the conventional STA 20. The conventional STA 20 sets, according to these control frames, to learn which channels are occupied and perform contention backoff.

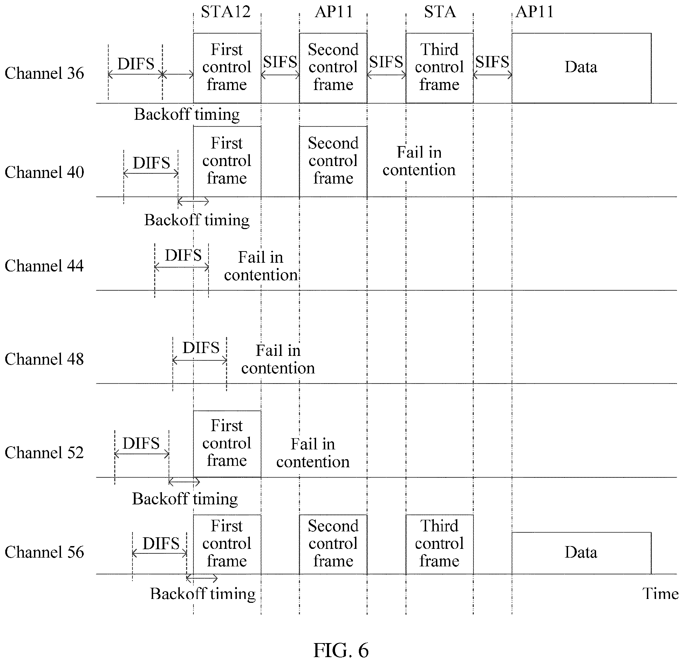

FIG. 6 is a schematic diagram of a contention mechanism in Embodiment 3 of a communications device applied to a wireless network. As shown in FIG. 6, the wireless network in this embodiment may use the structure shown in FIG. 5, and the communications device in this embodiment is any STA in the BSS, and is assumed to be the STA 12. The contention mechanism in this embodiment includes:

The STA 12 determines that a first channel is a channel 36, second channels include a channel 40, a channel 52, and a channel 56, and a channel 44 and a channel 48 are considered not to succeed in contention because the channel 44 and the channel 48 do not enter a backoff timing phase. The STA 12 sends a first control frame to the AP 11 by using the first channel and the second channel.

The AP 11 sends a second control frame by using a channel that receives the first control frame, the STA 12 sends the first control frame on the channel 36, the channel 40, the channel 52, and the channel 56, and the AP 11 may receive the first control frame on only the channel 36, the channel 40, and the channel 56. Therefore, the AP 11 sends the second control frame on the channel 36, the channel 40, and the channel 56. Because an RA is a pre-agreed value, all STAs in the BSS can demodulate the value. The AP 11 sends the second control frame for the situation in which some STAs (for example, the STA 13) do not receive the first control frame sent by the STA 12; in this way, the STAs in the BSS can all learn that a channel is successfully obtained by means of contention.

A STA sends a third control frame by using a channel that receives the second control frame; the AP sends the second control frame on the channel 36, the channel 40, and the channel 56, and the STA receives the second control frame on only the channel 36 and the channel 56. Therefore, the STA sends the third control frame on the channel 36 and the channel 56. The STA herein may be one or more of all stations that receive the second control frame, for example, the STAs 12, 13, and 14. Because the RA is a pre-agreed value, all the STAs in the BSS can demodulate the value. The STA sends the third control frame for the situation in which some STAs (for example, a first STA 14) do not receive all the previous control frames; in this way, the STAs in the BSS can all learn that a channel is successfully obtained by means of contention.

The AP 11 may further perform centralized control scheduling, so that at least two communications devices in the BSS can all use multiple channels to transmit data; after receiving, on the channel 36 and the channel 56, the third control frame sent by the STA, the AP 11 determines that the BSS succeeds in obtaining by means of contention the channel 36 and the channel 56. Therefore, it is prepared to send a control frame or a data frame on the channel 36 and the channel 56; in this case, the BSS enters a scheduling mode, and the AP 11 performs centralized control scheduling.

The conventional STA 20 learns by using the foregoing control frames that channels carrying the control frames are occupied, that is, the channel 36, the channel 40, the channel 52, and the channel 56 are occupied, and the conventional STA 20 cannot use these channels; and the conventional STA 20 sets a network allocation vector (Network Allocation Vector, NAV for short) of the conventional STA 20 according to the control frames; specifically, the conventional STA 20 sets the NAV of the conventional STA 20 according to Duration fields in the control frames.

In this embodiment, a STA in a BSS may not distinguish a primary-secondary relationship of channels and may not necessarily contend for channels in sequence according to priorities as in the prior art, but may synchronously determine a first channel and a second channel that succeed in contention, and then exchange information with another communications device by using the first channel and the second channel, to achieve an objective that at least two communications devices in the BSS use multiple channels to transmit data, which not only improves a success rate of channel contention, but also prevents massive bandwidth waste.

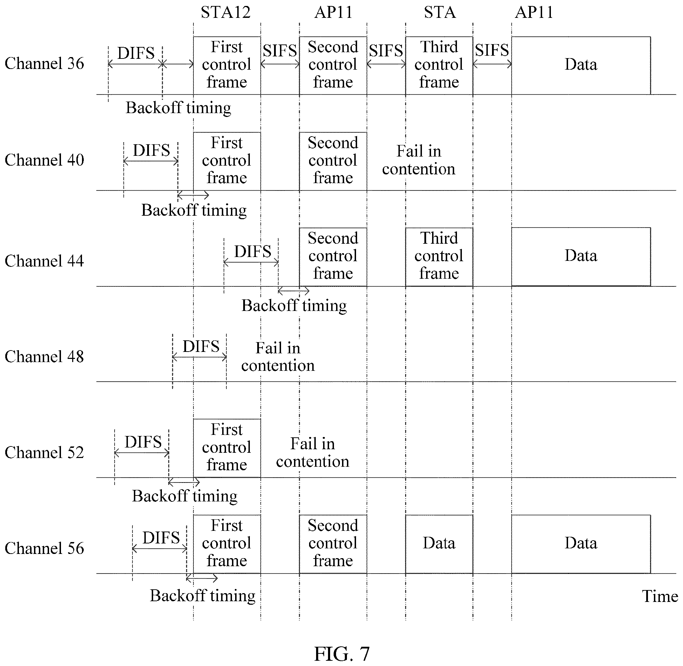

FIG. 7 is a schematic diagram of a contention mechanism in Embodiment 4 of a communications device applied to a wireless network. As shown in FIG. 7, the wireless network in this embodiment may use the structure shown in FIG. 5, and the communications device in this embodiment is any STA in the BSS, and is assumed to be the STA 12. Based on the contention mechanism shown in FIG. 6, the contention mechanism in this embodiment further includes:

When receiving the first control frame sent by the STA 12, the AP 11 determines the second channel considered to succeed in contention. Specifically, after receiving the first control frame on the channel 36, the channel 40, and the channel 56, the AP 11 determines that besides the channel 36, the channel 40, and the channel 56, the channel 44 that currently does not receive the first control frame but that is in a corresponding backoff timing phase and that is in an idle state is the second channel considered to succeed in contention.

The AP 11 sends the second control frame by using the channel that receives the first control frame and the second channel considered to succeed in contention. In this embodiment, the AP 11 sends the second control frame on the channel 36, the channel 40, the channel 56, and the channel 44.

The conventional STA 20 learns by using the foregoing control frames that channels carrying the control frames are occupied, that is, the channel 36, the channel 40, the channel 44, the channel 52, and the channel 56 are occupied, and the conventional STA 20 cannot use these channels; and the conventional STA20 sets the NAV of the conventional STA20 according to the control frames; specifically, the conventional STA20 sets the NAV of the conventional STA20 according to Duration fields in the control frames.

In this embodiment, as a device for receiving a control frame, an AP 11 may also determine a second channel considered to succeed in contention, add channels available to a system, and aggregate available channels as many as possible, which not only enlarges a bandwidth and improves a data speed, but also prevents bandwidth waste.

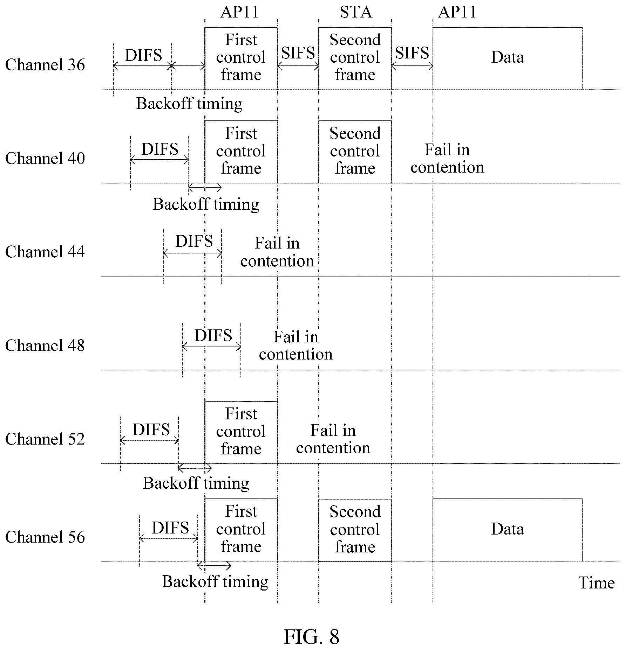

FIG. 8 is a schematic diagram of a contention mechanism in Embodiment 5 of a communications device applied to a wireless network. As shown in FIG. 8, the wireless network in this embodiment may use the structure shown in FIG. 5, and the communications device in this embodiment is the AP 11 in the BSS. The contention mechanism in this embodiment includes:

The AP 11 determines that a first channel is a channel 36, second channels include a channel 40, a channel 52, and a channel 56, and a channel 44 and a channel 48 are considered not to succeed in contention because the channel 44 and the channel 48 do not enter a backoff timing phase. The AP 11 sends a first control frame to a STA by using the first channel and the second channel. Because an RA is a pre-agreed value, all STAs in the BSS can demodulate the value.

The STA sends a second control frame by using a channel that receives the first control frame, the AP 11 sends the first control frame on the channel 36, the channel 40, the channel 52, and the channel 56, and the STA (any one or more of the STAs 12, 13, and 14) may receive the first control frame on only the channel 36, the channel 40, and the channel 56. Therefore, the STA sends the second control frame on the channel 36, the channel 40, and the channel 56. Because the RA is a pre-agreed value, all the STAs in the BSS and the AP 11 can demodulate the value. The STA sends the second control frame for the situation in which some STAs (for example, the STA 13) do not receive the first control frame; in this way, the STAs in the BSS can all learn that a channel is successfully obtained by means of contention.

The AP 11 performs centralized control scheduling, so that at least two communications devices in the BSS can all use multiple channels to transmit data; after receiving the second control frame on the channel 36 and the channel 56, the AP 11 determines that the BSS succeeds in obtaining by means of contention the channel 36 and the channel 56. Therefore, it is prepared to send a control frame or a data frame on the channel 36 and the channel 56; in this case, the BSS enters a scheduling mode, and the AP 11 performs centralized control scheduling.

The conventional STA 20 learns by using the foregoing control frames that channels carrying the control frames are occupied, that is, the channel 36, the channel 40, the channel 52, and the channel 56 are occupied, and the conventional STA 20 cannot use these channels; and the conventional STA 20 sets an NAV of the conventional STA 20 according to the control frames; specifically, the conventional STA20 sets the NAV of the conventional STA20 according to Duration fields in the control frames.

In this embodiment, an AP 11 in a BSS may not distinguish a primary-secondary relationship of channels and may not necessarily contend for channels in sequence according to priorities as in the prior art, but may synchronously determine a first channel and a second channel that succeed in contention, and then exchange information with another communications device by using the first channel and the second channel, to achieve an objective that at least two communications devices in the BSS use multiple channels to transmit data, which not only improves a success rate of channel contention, but also prevents massive bandwidth waste.

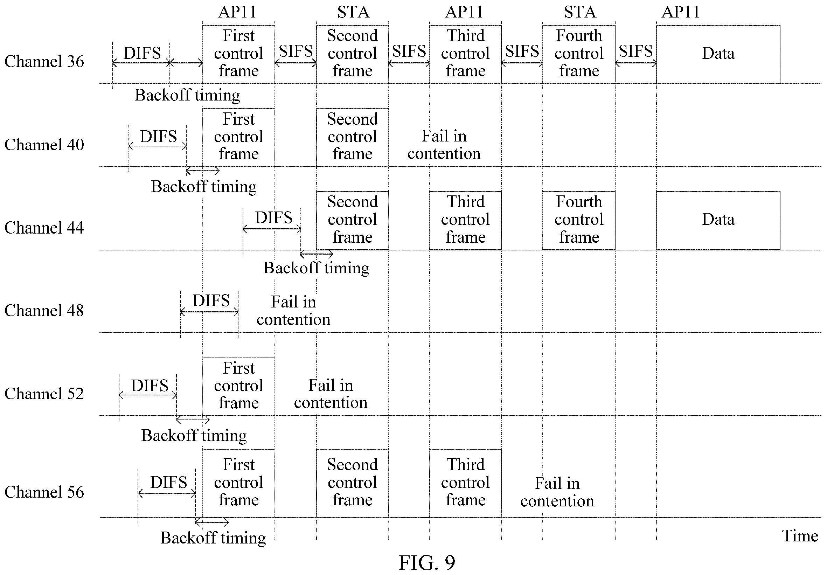

FIG. 9 is a schematic diagram of a contention mechanism in Embodiment 6 of a communications device applied to a wireless network. As shown in FIG. 9, the wireless network in this embodiment may use the structure shown in FIG. 5, and the communications device in this embodiment is the AP 11 in the BSS. Based on the contention mechanism shown in FIG. 8, the contention mechanism in this embodiment further includes:
When receiving the first control frame sent by the AP 11, a STA (any one or more of the STAs 12, 13, and 14) determines the second channel considered to succeed in contention. Specifically, after receiving the first control frame on the channel 36, the channel 40, and the channel 56, the STA determines that besides the channel 36, the channel 40, and the channel 56, the channel 44 that currently does not receive the first control frame but that is in a corresponding backoff timing phase and that is in an idle state is the second channel considered to succeed in contention.

The STA sends the second control frame by using the channel that receives the first control frame and the second channel considered to succeed in contention. In this embodiment, the STA sends the second control frame on the channel 36, the channel 40, the channel 56, and the channel 44.

The AP 11 sends a third control frame by using a channel that receives the second control frame, the STA sends the second control frame on the channel 36, the channel 40, the channel 44, and the channel 56, and the AP 11 may receive the second control frame on only the channel 36, the channel 44, and the channel 56. Therefore, the AP 11 sends the third control frame on the channel 36, the channel 44, and the channel 56. Because the RA is a pre-agreed value, all the STAs in the BSS can demodulate the value. The AP 11 sends the third control frame for the situation in which some STAs (for example, a first STA 13) do not receive all the previous control frames; in this way, the STAs in the BSS can all learn that a channel is successfully obtained by means of contention.

The STA (any one or more of the STAs 12, 13, and 14) sends a fourth control frame by using a channel that receives the third control frame, the AP 11 sends the third control frame on the channel 36, the channel 44, and the channel 56, and the STA may receive the third control frame on only the channel 36 and the channel 44. Therefore, the STA sends the fourth control frame on the channel 36 and the channel 44.

The conventional STA 20 learns by using the foregoing control frames that channels carrying the control frames are occupied, that is, the channel 36, the channel 40, the channel 44, the channel 52, and the channel 56 are occupied, and sets the NAV of conventional STA 20 according to the control frames.

In this embodiment, as a device for receiving a control frame, a STA may also determine a second channel considered to succeed in contention, add channels available to a system, and aggregate available channels as many as possible, which not only enlarges a bandwidth and improves a data speed, but also prevents bandwidth waste.

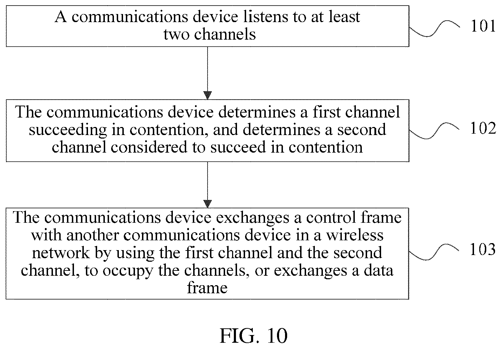

FIG. 10 is a flowchart of Embodiment 1 of a multi-channel contention method. As shown in FIG. 10, the method in this embodiment may include:
Step 101: A communications device listens to at least two channels.

The communications device in this embodiment belongs to a BSS, the BSS is a basic service set of a wireless network to which a scheduling mode is introduced and that includes an AP and at least two STAs; the AP and the at least two STAs all participate in channel contention, and the communications device may be the AP or any STA in the BSS. The AP and the STAs in the BSS in the present invention all participate in contending for multiple channels, which can improve a success rate of channel contention of the whole BSS.

Step 102: The communications device determines a first channel succeeding in contention, and determines a second channel considered to succeed in contention.

In this embodiment, the communications device determines the first channel succeeding in contention, and determines the second channel considered to succeed in contention. The first channel and the second channel herein may separately be one or more channels, and these channels are not distinguished by a priority, that is, any channel of the at least two channels that are listened to in step 101 may be the first channel or the second channel.

Step 103: The communications device exchanges a control frame with another communications device in a wireless network by using the first channel and the second channel, to occupy the channels, or exchanges a data frame.

In this embodiment, after obtaining by means of contention the first channel and the second channel, the communications device performs exchange, including control frame exchange and data frame exchange, with the another communications device in the wireless network by using the first channel and the second channel. Regardless of whether the communications device is the AP or the STA, after obtaining by means of contention channels, the communications device exchanges information with the another communications device, so that all STAs in the BSS learn that channel contention is successful; afterwards, the BSS enters a scheduling mode, and performs centralized control scheduling by using the AP.

In this embodiment, a communications device in a BSS may synchronously determine a first channel succeeding in contention and a second channel considered to succeed in contention, then perform exchange with another communications device by using the first channel and the second channel, and perform centralized scheduling by using an AP to achieve an objective that at least two communications devices in the BSS use multiple channels to transmit data, which not only improves a success rate of channel contention, but also prevents massive bandwidth waste.

The control frame includes a Frame Control field used to identify the control frame and a Duration field used to record duration of occupying a subsequent channel, and may be HEW-RTS, HEW-CTS, or HEW-ACK. The control frame of the present invention may use the frame structure shown in FIG. 3 or FIG. 4.

Further, a specific implementation method of step 102, in the foregoing method embodiment, of determining, by the communications device, a first channel succeeding in contention, and determines a second channel considered to succeed in contention may be: entering a waiting phase when the communications device obtains by means of listening that any channel of the at least two channels is in an idle state, and if the any channel is still in an idle state after the waiting phase, determining that the any channel enters a backoff timing phase; and determining, by the communications device, a channel that is still in an idle state after a corresponding backoff timing phase ends as the first channel succeeding in contention, and determining another channel that is currently still in a corresponding backoff timing phase and that is in an idle state as the second channel considered to succeed in contention.

Specifically, when listening to multiple channels, the communications device finds that any channel of the at least two channels is in an idle state, and enters the waiting phase. Duration of the waiting phase may be an xIFS, and the xIFS may be duration defined in a standard, such as an SIFS, a PIFS, a DIFS, or an AIFS. After the communications device waits for duration of the xIFS, if the any channel is still in an idle state, the any channel enters the backoff timing phase, where backoff timing may be a counter in which the communications device presets backoff duration; when the any channel enters the backoff timing phase, the counter starts to count down, that timing ends is that the backoff timing phase ends. The communications device determines a channel that is still in an idle state after a corresponding backoff timing phase ends as the first channel succeeding in contention, that is, as long as a counter on any channel returns to zero, it indicates that the channel succeeds in contention; it is not excluded that there are multiple channels that synchronously return to zero, and these channels all succeed in contention, which is not specifically limited in the present invention. In addition, the communications device determines another channel that is currently still in a corresponding backoff timing phase and that is in an idle state as the second channel considered to succeed in contention.

Further, before step 102 in the foregoing method embodiment, the method further includes: receiving, by the communications device, a first control frame from the another communications device, where a specific implementation method of step 102 of determining, by the communications device, a first channel succeeding in contention, and determining a second channel considered to succeed in contention may be: determining, by the communications device, a channel that receives the first control frame as the first channel succeeding in contention, and determining another channel that currently does not receive the control frame but that is in a corresponding backoff timing phase and that is in an idle state as the second channel considered to succeed in contention.

Specifically, the communications device as a receiver device first receives the first control frame sent by the another communications device, then the communications device determines the channel that receives the first control frame as the first channel succeeding in contention, and determines another channel that currently does not receive the control frame but that is in a corresponding backoff timing phase and that is in an idle state as the second channel considered to succeed in contention, that is, the communications device as a receiver device may also determine the second channel considered to succeed in contention from channels that do not receive the control frame, thereby avoiding omission of an available channel.

The technical solutions of the method embodiment shown in FIG. 10 are described in detail below by using several specific embodiments.

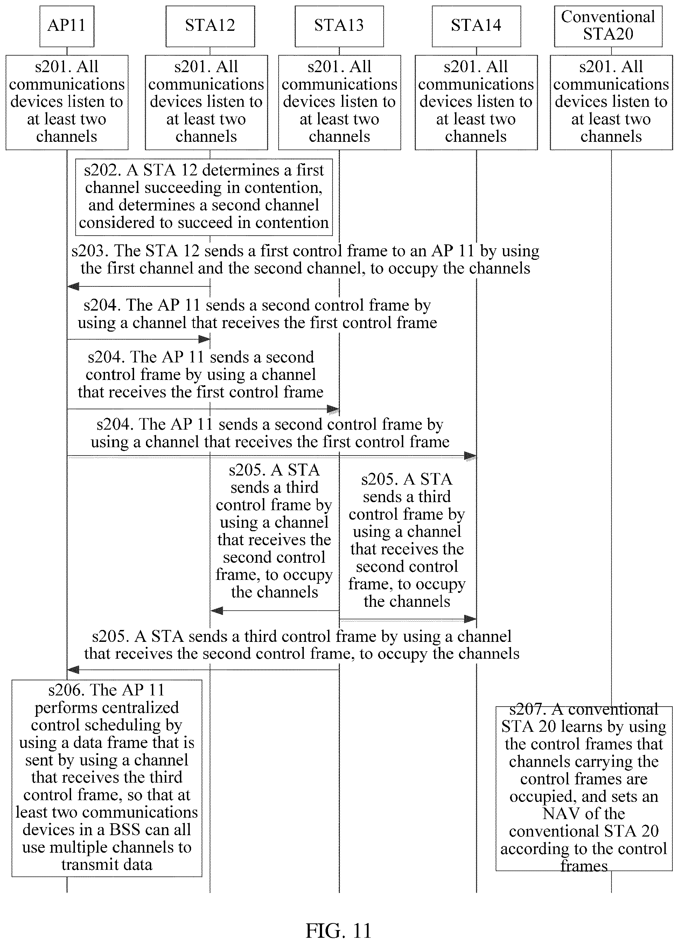

FIG. 11 is a flowchart of Embodiment 2 of a multi-channel contention method according to the present invention. As shown in FIG. 11, the method in this embodiment is applicable to the structure shown in FIG. 5, and the communications device in this embodiment is any STA in a BSS and is assumed to be the STA 12. The method in this embodiment may include:
s201: All communications devices listen to at least two channels.

In this embodiment, a process in which all the communications devices in the BSS listen to the at least two channels is similar to that of step 101 in the foregoing method embodiment and is not described in detail herein again.

s202: The STA 12 determines a first channel succeeding in contention, and determines a second channel considered to succeed in contention.

In this embodiment, a process in which the STA 12 determines the first channel succeeding in contention, and determines the second channel considered to succeed in contention is similar to that of step 102 in the foregoing method embodiment and is not described in detail herein again.

s203: The STA 12 sends a first control frame to the AP 11 by using the first channel and the second channel, to occupy the channels.

In this embodiment, the first control frame may use the frame structure shown in FIG. 3.

s204: The AP 11 sends a second control frame by using a channel that receives the first control frame.

In this embodiment, the second control frame may use the frame structure shown in FIG. 4.

s205: A STA sends a third control frame by using a channel that receives the second control frame, to occupy the channels.

In this embodiment, the third control frame may use the frame structure shown in FIG. 4. The STA may be any one or more of the STAs 12, 13, and 14, and an example in which the STA is the STA 13 is used in this embodiment.

s206: The AP 11 performs centralized control scheduling by using a data frame that is sent by using a channel that receives the third control frame, so that at least two communications devices in a BSS can all use multiple channels to transmit data.

s207: The conventional STA 20 learns by using the control frames that channels carrying the control frames are occupied, and sets an NAV of the conventional STA 20 according to the control frames.

An implementation process of s203 to s206 is similar to the contention mechanism in Embodiment 3 of the communications device applied to the wireless network shown in FIG. 6 and is not described in detail herein again.

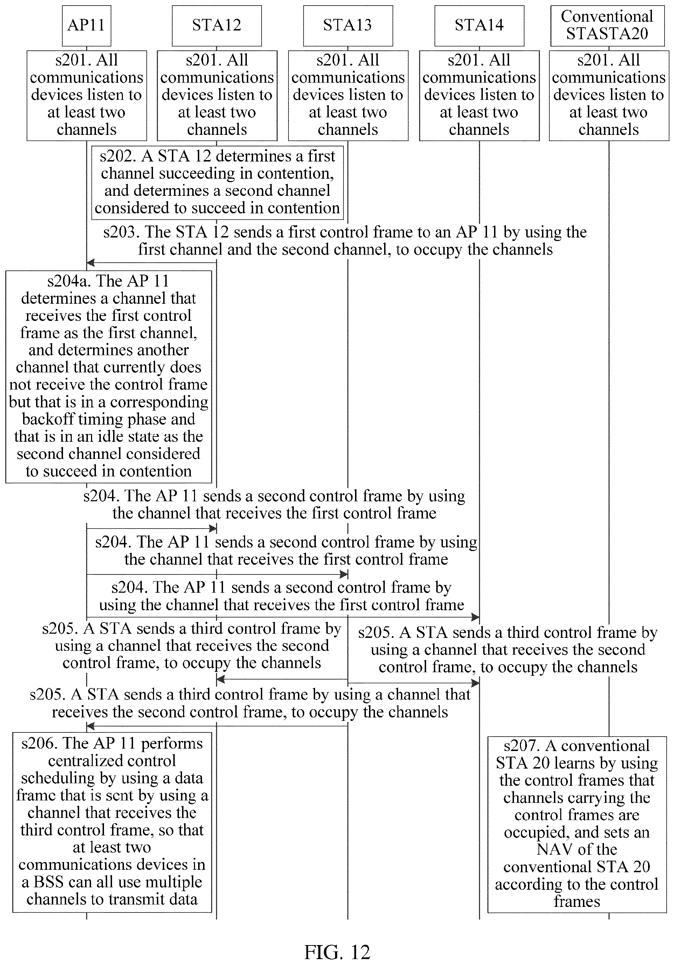

FIG. 12 is a flowchart of Embodiment 3 of a multi-channel contention method. As shown in FIG. 12, based on the method embodiment shown in FIG. 11, before s204 of sending, by the AP 11, a second control frame by using a channel that receives the first control frame, the method in this embodiment further includes: s204a: The AP 11 determines the channel that receives the first control frame as the first channel, and determines another channel that currently does not receive the control frame but that is in a corresponding backoff timing phase and that is in an idle state as the second channel considered to succeed in contention. In s204, the AP 11 sends the second control frame by using both the first channel that receives the first control frame and the second channel.

An implementation process is similar to the contention mechanism in Embodiment 4 of the communications device applied to the wireless network shown in FIG. 7 and is not described in detail herein again.

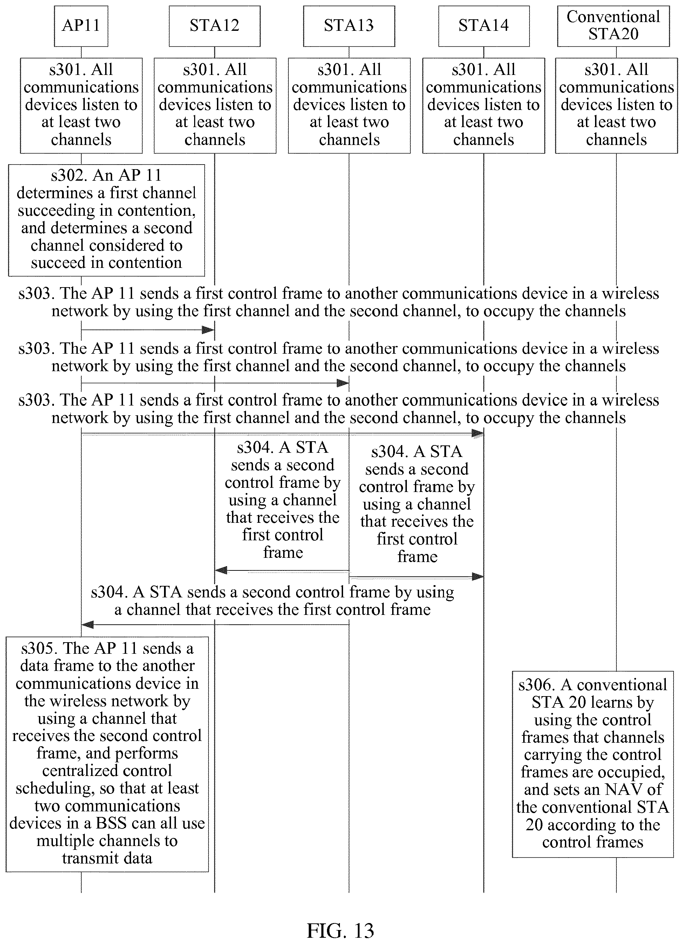

FIG. 13 is a flowchart of Embodiment 4 of a multi-channel contention method. As shown in FIG. 13, the method in this embodiment is applicable to the structure shown in FIG. 5, and the communications device in this embodiment is the AP 11 in the BSS. The method in this embodiment may include:
s301: All communications devices listen to at least two channels.

In this embodiment, a process in which the communications device listens to the at least two channels is similar to that of step 101 in the foregoing method embodiment and is not described in detail herein again.

s302: The AP 11 determines a first channel succeeding in contention, and determines a second channel considered to succeed in contention.

In this embodiment, a process in which the AP 11 determines the first channel succeeding in contention, and determines the second channel considered to succeed in contention is similar to that of step 102 in the foregoing method embodiment and is not described in detail herein again.

s303: The AP 11 sends a first control frame to another communications device in a wireless network by using the first channel and the second channel, to occupy the channels.

In this embodiment, the first control frame may use the frame structure shown in FIG. 3.

s304: The STA sends a second control frame by using a channel that receives the first control frame.

In this embodiment, the second control frame may use the frame structure shown in FIG. 4. The STA may be any one or more of the STAs 12, 13, and 14, and an example in which the STA is the STA 13 is used in this embodiment.

s305: The AP 11 sends a data frame to the another communications device in the wireless network by using a channel that receives the second control frame, and performs centralized control scheduling, so that at least two communications devices in the BSS can all use multiple channels to transmit data.

S306: The conventional STA 20 learns by using the control frames that channels carrying the control frames are occupied, and sets an NAV of the conventional STA 20 according to the control frames.

An implementation process of s303 to s305 is similar to the contention mechanism in Embodiment 5 of the communications device applied to the wireless network shown in FIG. 8 and is not described in detail herein again.

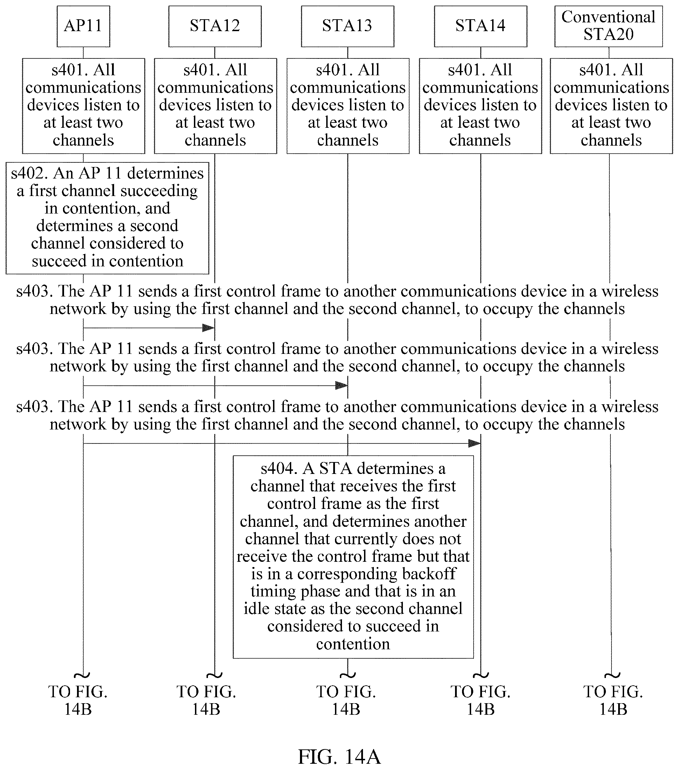

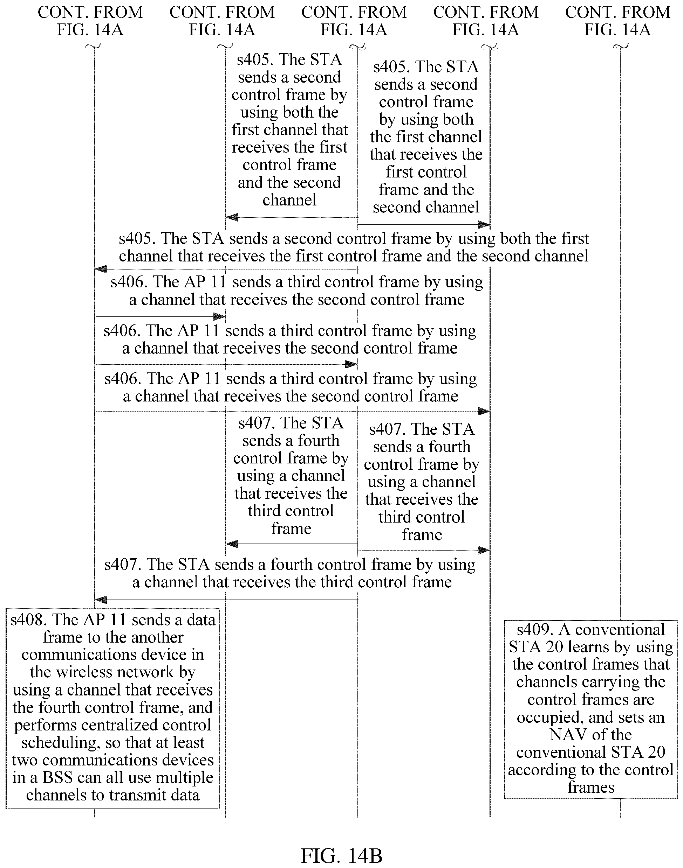

FIG. 14A and FIG. 14B are a flowchart of Embodiment 5 of a multi-channel contention method. As shown in FIG. 14A and FIG. 14B, the method in this embodiment is applicable to the structure shown in FIG. 5, and the communications device in this embodiment is the AP 11 in the BSS. The method in this embodiment may include:
s401: All communications devices listen to at least two channels.

In this embodiment, a process in which the communications device listens to the at least two channels is similar to that of step 101 in the foregoing method embodiment and is not described in detail herein again.

s402: The AP 11 determines a first channel succeeding in contention, and determines a second channel considered to succeed in contention.

In this embodiment, a process in which the AP 11 determines the first channel succeeding in contention, and determines the second channel considered to succeed in contention is similar to that of step 102 in the foregoing method embodiment and is not described in detail herein again.

s403: The AP 11 sends a first control frame to another communications device in a wireless network by using the first channel and the second channel, to occupy the channels.

In this embodiment, the first control frame may use the frame structure shown in FIG. 3.

s404: A STA determines a channel that receives the first control frame as the first channel, and determines another channel that currently does not receive the control frame but that is in a corresponding backoff timing phase and that is in an idle state as the second channel considered to succeed in contention.

In this embodiment, the STA may be any one or more of the STAs 12, 13, and 14, and an example in which the STA is the STA 13 is used in this embodiment.

s405: The STA sends a second control frame by using both the first channel that receives the first control frame and the second channel.

In this embodiment, the second control frame may use the frame structure shown in FIG. 4.

s406: The AP 11 sends a third control frame by using a channel that receives the second control frame.

In this embodiment, the third control frame may use the frame structure shown in FIG. 4.

s407: The STA sends a fourth control frame by using a channel that receives the third control frame.

In this embodiment, the fourth control frame may use the frame structure shown in FIG. 4.

s408: The AP 11 sends a data frame to the another communications device in the wireless network by using a channel that receives the fourth control frame, and performs centralized control scheduling, so that at least two communications devices in the BSS can all use multiple channels to transmit data.

s409: The conventional STA 20 learns by using the control frames that channels carrying the control frames are occupied, and sets an NAV of the conventional STA 20 according to the control frames.

An implementation process of s403 to s408 is similar to the contention mechanism in Embodiment 6 of the communications device applied to the wireless network shown in FIG. 9 and is not described in detail herein again.

In the several embodiments provided in the present invention, it should be understood that the disclosed apparatus and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, or a network device) or a processor (processor) to perform some of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The station STA in the foregoing implementation manners may also be referred to as an access terminal, a system, a user unit, a user station, a mobile station, a mobile terminal, a remote station, a remote terminal, a mobile device, a user terminal, a terminal, a wireless communications device, a user agent, a user apparatus, or UE (User Equipment, user equipment). The station STA may be a cellular phone, a cordless phone, a SIP (Session Initiation Protocol, Session Initiation Protocol) phone, a WLL (Wireless Local Loop, wireless local loop) station, a PDA (Personal Digital Assistant, personal digital assistant), a handheld device or a computing device with a radio communication function, or another processing device connected to a radio modem. In addition, an access point may also be referred to as a base station.

It may be clearly understood by persons skilled in the art that, for the purpose of convenient and brief description, division of the foregoing functional modules is taken as an example for illustration. In actual application, the foregoing functions can be allocated to different functional modules and implemented according to a requirement, that is, an inner structure of an apparatus is divided into different functional modules to implement all or some of the functions described above. For a detailed working process of the foregoing apparatus, reference may be made to a corresponding process in the foregoing method embodiments, and details are not described herein again.

Finally, it should be noted that the foregoing embodiments are merely intended for describing the technical solutions of the present invention, but not for limiting the present invention.

## Claims

1. A multi-channel contention method performed by a STA (12) in a basic service set, BSS, the BSS including the STA (12) and an access point, AP, (11), the method comprising:
• listening, by the STA (12), to at least two channels (S201);
• determining, by the STA (12), a first channel among the at least two channels succeeding in contention, and determining, by the STA (12), a second channel, among the at least two channels, considered to succeed in contention (S202), wherein the determining, by the STA (12), the first channel succeeding in contention, and determining the second channel considered to succeed in contention comprises:
• entering a waiting phase when the STA (12) obtains by means of listening that any channel of the at least two channels is in an idle state, and if the any channel is still in an idle state after the waiting phase, determining that the any channel enters a backoff timing phase; and
• determining a channel that is still in an idle state after a corresponding backoff timing phase ends as the first channel succeeding in contention, and determining another channel that is currently still in a corresponding backoff timing phase and that is in an idle state as the second channel considered to succeed in contention;
• sending, by the STA (12), a first control frame to the AP (11) by using the first channel and the second channel, to occupy the first and second channel;
• receiving, by the STA (12), a second control frame from the AP (11), the second control frame being sent by the AP (11) on a channel that receives the first control frame;
• sending, by the STA (12), a third control frame to the AP (11) by using a channel that receives the second control frame (S205); and
• receiving, by the STA (12), a further control frame from the AP (11), the further control frame being sent by the AP (11) on a channel that receives the third control frame.

2. The method according to claim 1, wherein the first, second, third or the further control frame comprises a frame control Frame Control field used to identify the corresponding control frame and a duration Duration field used to record duration of occupying a subsequent channel.

3. The method according to claim 2, wherein the first, second, third, or the further control frame is a high efficiency wireless local area network request to send HEW-RTS, a high efficiency wireless local area network clear to send HEW-CTS, or a high efficiency wireless local area network acknowledgement HEW-ACK.

4. A station, STA, (12) configured to perform any of the methods according to claims 1 -3.

## Patentansprüche

1. Mehrkanal-Konfliktverfahren, das durch eine STA (12) in einem "Basic Service Set" bzw. BSS durchgeführt wird, wobei der BSS die STA (12) und einen Zugangspunkt bzw. AP (11) beinhaltet, wobei das Verfahren Folgendes umfasst:
Abhören, durch die STA (12), von wenigstens zwei Kanälen (S201);
Bestimmen, durch die STA (12), eines ersten Kanals unter den wenigstens zwei Kanälen, der bei einem Konflikt erfolgreich ist, und Bestimmen, durch die STA (12), eines zweiten Kanals unter den wenigstens zwei Kanälen, der bei einem Konflikt als erfolgreich erwartet wird (S202), wobei das Bestimmen, durch die STA (12), des ersten Kanals, der bei einem Konflikt erfolgreich ist, und das Bestimmen des zweiten Kanals, der bei einem Konflikt als erfolgreich erwartet wird, Folgendes umfasst:
Eintreten in eine Wartephase, wenn die STA (12) durch Abhören erhält, dass sich ein beliebiger Kanal der wenigstens zwei Kanäle in einem Ruhezustand befindet, und,
falls der beliebige Kanal sich nach der Wartephase weiterhin im Ruhezustand befindet, Bestimmen, dass der beliebige Kanal in eine "Backoff-Timing"-Phase eintritt; und
Bestimmen eines Kanals, der sich nach dem Ende einer entsprechenden "Backoff-Timing"-Phase noch immer in einem Ruhezustand befindet, als den ersten Kanal, der bei einem Konflikt erfolgreich ist, und Bestimmen eines anderen Kanals, der sich aktuell noch in einer entsprechenden "Backoff-Timing"-Phase befindet und sich in einem Ruhezustand befindet, als den zweiten Kanal, der bei einem Konflikt als erfolgreich erwartet wird;
Senden, durch die STA (12), eines ersten Steuerrahmens unter Verwendung des ersten Kanals und des zweiten Kanals zum AP (11), um den ersten und zweiten Kanal zu belegen;
Empfangen, durch die STA (12), eines zweiten Steuerrahmens vom AP (11), wobei der zweite Steuerrahmen durch den AP (11) auf einem Kanal gesendet wird, der den ersten Steuerrahmen empfängt;
Senden, durch die STA (12), eines dritten Steuerrahmens unter Verwendung eines Kanals, der den zweiten Steuerrahmen empfängt, zum AP (11) (S205); und
Empfangen, durch die STA (12), eines weiteren Steuerrahmens vom AP (11), wobei der weitere Steuerrahmen durch den AP (11) auf einem Kanal gesendet wird, der den dritten Steuerrahmen empfängt.

2. Verfahren nach Anspruch 1, wobei der erste, zweite, dritte oder der weitere Steuerrahmen ein Rahmensteuerfeld bzw. "Frame-Control"-Feld, das zum Identifizieren des entsprechenden Steuerrahmens verwendet wird, und ein Dauerfeld bzw. "Duration"-Feld, das zum Aufzeichnen der Dauer der Belegung eines nachfolgenden Kanals verwendet wird, umfasst.

3. Verfahren nach Anspruch 2, wobei der erste, zweite, dritte oder der weitere Steuerrahmen eine Hocheffizienz-Drahtloslokalnetz-Sendeanforderung bzw. HEW-RTS ("High Efficiency Wireless Local Area Network Request To Send"), eine Hocheffizienz-Drahtloslokalnetz-Sendeerlaubnis bzw. HEW-CTS ("High Efficiency Wireless Local Area Network Clear To Send") oder eine Hocheffizienz-Drahtloslokalnetz-Bestätigung bzw. HEW-ACK ("High Efficiency Wireless Local Area Network Acknowledgement") ist.

4. Station bzw. STA (12), die ausgelegt ist zum Durchführen eines beliebigen der Verfahren nach den Ansprüchen 1-3.

## Revendications

1. Procédé de contention entre de multiples canaux réalisé par une STA (12) dans un ensemble de services de base (BSS), le BSS incluant la STA (12) et un point d'accès (AP) (11), le procédé comprenant les étapes consistant à :
• écouter, par la STA (12), au moins deux canaux (s201) ;
• déterminer, par la STA (12) parmi les au moins deux canaux, un premier canal gagnant la contention et déterminer, par la STA (12) parmi les au moins deux canaux, un second canal considéré pour gagner la contention (s202),
la détermination, par la STA (12), du premier canal gagnant la contention et la détermination du second canal considéré pour gagner la contention comprenant les étapes consistant à :
• entrer dans une phase d'attente quand la STA (12) apprend, au moyen d'une écoute, qu'un canal quelconque parmi les au moins deux canaux est dans un état de repos, et si le canal quelconque est encore dans un état de repos après la phase d'attente, déterminer que le canal quelconque entre dans une phase de temporisation ; et
• déterminer qu'un canal qui est encore dans un état de repos après la fin d'une phase de temporisation correspondante est le premier canal gagnant la contention et déterminer qu'un autre canal qui est actuellement encore dans une phase de temporisation correspondante et qui est dans un état de repos est le second canal considéré pour gagner la contention ;
• envoyer, par la STA (12), une première trame de contrôle à l'AP (11) au moyen du premier canal et du second canal pour occuper le premier canal et le second canal ;
• recevoir, par la STA (12), une deuxième trame de contrôle en provenance de l'AP (11), la deuxième trame de contrôle étant envoyée par l'AP (11) sur un canal qui reçoit la première trame de contrôle ;
• envoyer, par la STA (12), une troisième trame de contrôle à l'AP (11) au moyen d'un canal qui reçoit la deuxième trame de contrôle (s205) ; et
• recevoir, par la STA (12), une autre trame de contrôle en provenance de l'AP (11), l'autre trame de contrôle étant envoyée par l'AP (11) sur un canal qui reçoit la troisième trame de contrôle.

2. Procédé selon la revendication 1, dans lequel la première, la deuxième, la troisième ou l'autre trame de contrôle comprend un champ de contrôle de trame Frame Control utilisé pour identifier la trame de contrôle correspondante et un champ de durée Duration utilisé pour enregistrer une durée d'occupation d'un canal postérieur.

3. Procédé selon la revendication 2, dans lequel la première, la deuxième, la troisième ou l'autre trame de contrôle est un signal de demande pour émettre de réseau local sans fil à haut rendement (HEW-RTS), un signal prêt à émettre de réseau local sans fil à haut rendement (HEW-CTS) ou un signal d'accusé de réception de réseau local sans fil à haut rendement (HEW-ACK).

4. Station (STA) (12) configurée pour réaliser l'un quelconque des procédés selon les revendications 1 à 3.
